# EUROPÄISCHE PATENTANMELDUNG

(11) **EP 4 516 537 A1**
(43) Veröffentlichungstag der Anmeldung: **05.03.2025**
(21) Anmeldenummer: 24196956.7
(22) Anmeldetag: 28.08.2024
(51) Int. Cl.: B60C 23/00, B60C 23/10, B60S 9/04, B60C 29/06

(54) **NOTFALLSYSTEM**

(30) Priorität: 29.08.2023 DE 202023104906 U
(71) Anmelder: Fatih, Selahattin, 32051 Herford (DE)
(72) Erfinder: Fatih, Selahattin, 32051 Herford (DE)
(74) Vertreter: Ter Meer Steinmeister & Partner

(57) **Zusammenfassung**

Notfallsystem für ein Kraftfahrzeug, umfassend eine Drucklufteinheit und eine Anzahl elektrisch betriebener Wagenheber, dadurch gekennzeichnet, dass das Notfallsystem eine Kontrolleinheit, die mit der Drucklufteinheit, der Anzahl elektrisch betriebener Wagenheber und einer Fahrzeugbatterie verbindbar ist, umfasst, wobei die Drucklufteinheit zur Druckluftbeaufschlagung von Reifen des Kraftfahrzeugs, insbesondere im Pannenfall, eingerichtet ist und einen Kompressor und eine Druckluft-Reifenfüllanlage umfasst, wobei die Druckluft-Reifenfüllanlage eine Anzahl fest am Kraftfahrzeug installierte Druckluftanschlüsse umfasst, die jeweils einen flexiblen Druckluftschlauch umfassen, wobei ein freies Ende des jeweiligen Druckluftschlauchs an ein Reifenventil anschließbar ist, wobei die Druckluftschläuche in einem Nichtbenutzungszustand vollständig im Kraftfahrzeug verstaubar und daraus entnehmbar sind und wobei die Druckluftschläuche durch den Kompressor gespeist werden; wobei die Anzahl elektrisch betriebener Wagenheber in ein Fahrgestell des Kraftfahrzeugs integriert ist und jeweils eine aus dem Fahrgestell gegen den Boden ausfahrbare Stütze umfasst, wobei die jeweilige Stütze von einem jeweiligen über die Fahrzeugbatterie gespeisten Getriebemotor angetrieben wird; wobei die Kontrolleinheit eine Steuereinheit umfasst, die zum Bedienen der Kontrolleinheit eingerichtet ist.

## Beschreibung

Die vorliegende Erfindung betrifft ein Notfallsystem für ein Kraftfahrzeug gemäß dem Oberbegriff des Anspruchs 1.

Kraftfahrzeuge der vorliegenden Art umfassen in üblicher Weise ein Fahrgestell, in welchem eine Anzahl von Rädern mit einer Luftbereifung angebracht ist. Die Luftbereifung der Räder sind mit Reifenventilen versehen, über welche sich die Reifen aufpumpen lassen.

Vermehrt umfassen moderne Kraftfahrzeuge ein als Reifenreparaturset bezeichnetes Werkzeug, um kleine Reifenpannen vorübergehend selbst zu beheben, ohne auf einen Ersatzreifen oder professionelle Hilfe angewiesen zu sein. Ein Reifenreparaturset besteht üblicherweise aus einer speziellen Dichtflüssigkeit, die in einen beschädigten Reifen eingefüllt wird, und einer Drucklufteinheit, insbesondere einem mobilen Kompressor, zum Aufpumpen des provisorisch abgedichteten Reifens. Zum Verwenden des Reifenreparaturset oder zum Austausch des beschädigten Reifens kann es nötig sein, dass Fahrzeug mit einem Wagenheber anzuheben. Neben herkömmlichen manuell betriebenen Wagenhebern gewinnen elektrisch betriebene Wagenheber, die zum Anheben einen elektrischen Motor nutzen, zunehmend an Beliebtheit. Das korrekte Verwenden des Wagenhebers, insbesondere das Positionieren des Wagenhebers an vorgesehenen Wagenheberpunkten ist jedoch entscheidend, um sicherzustellen, dass das Fahrzeug richtig angehoben werden kann, um Verletzungen beim Anwender und/oder Schäden am Fahrzeug zu vermeiden. Die Handhabung des Reifenreparaturset, als auch des Wagenhebers ist teils umständlich, zum anderen müssen beide Werkzeuge im Fahrzeug mitgeführt werden und sollten im Notfall griffbereit sein. Da sie selten gebraucht werden, werden sie in der Regel an einer entlegenen Stelle verstaut, z. B. unter der Bodenabdeckung des Kofferraums, so dass sie im Notfall nicht sofort einsatzbereit sind. Überdies müssen die Werkzeuge nicht nur mühsam montiert werden, sondern auch umständlich an eine Stromversorgung angeschlossen und bedient werden.

Es ist daher eine Aufgabe der vorliegenden Erfindung, Mittel zur Behebung einer Reifenpanne zur Verfügung zu stellen, deren Handhabung gegenüber eines herkömmlichen Reifenreparaturset und eines herkömmlichen Wagenhebers vereinfacht und erleichtert ist und welche die oben beschriebenen Nachteile überwindet, etwa hinsichtlich der Einsatzbereitschaft und der Bedienung.

Diese Aufgabe wird erfindungsgemäß durch ein Notfallsystem für ein Kraftfahrzeug mit den Merkmalen des Anspruchs 1 sowie den Unteransprüchen gelöst.

Das erfindungsgemäße Notfallsystem für ein Kraftfahrzeug umfasst eine Drucklufteinheit und eine Anzahl elektrisch betriebener Wagenheber, dadurch gekennzeichnet, dass das Notfallsystem eine Kontrolleinheit, die mit der Drucklufteinheit, der Anzahl elektrisch betriebener Wagenheber und einer Fahrzeugbatterie verbindbar ist, umfasst, wobei die Drucklufteinheit zur Druckluftbeaufschlagung von Reifen des Kraftfahrzeugs, insbesondere im Pannenfall, eingerichtet ist und einen Kompressor und eine Druckluft-Reifenfüllanlage umfasst, wobei die Druckluft-Reifenfüllanlage eine Anzahl fest am Kraftfahrzeug installierte Druckluftanschlüsse umfasst, die jeweils einen flexiblen Druckluftschlauch umfassen, wobei ein freies Ende des jeweiligen Druckluftschlauchs an ein Reifenventil anschließbar ist, wobei die Druckluftschläuche in einem Nichtbenutzungszustand vollständig im Kraftfahrzeug verstaubar und daraus entnehmbar sind und wobei die Druckluftschläuche durch den Kompressor gespeist werden; wobei die Wagenheber in ein Fahrgestell des Kraftfahrzeugs integriert sind und jeweils eine aus dem Fahrgestell gegen den Boden ausfahrbare Stütze umfassen, wobei die Stützen von einem jeweiligen über die Fahrzeugbatterie gespeisten Getriebemotor angetrieben werden; wobei die Kontrolleinheit eine Steuereinheit umfasst, die zum Bedienen der Kontrolleinheit eingerichtet ist.

Das Notfallsystem für ein Kraftfahrzeug zeichnet sich zum einen dadurch aus, dass die zur provisorischen Druckluftbeaufschlagung von Reifen des Kraftfahrzeugs im Pannenfall eingerichtete Drucklufteinheit einen Kompressor und eine Druckluft-Reifenfiillanlage umfasst. Der Kompressor kann im Kofferraum des Kraftfahrzeugs angeordnet sein. Die Druckluft-Reifenfüllanlage umfasst eine Anzahl fest am Kraftfahrzeug installierte Druckluftanschlüsse, die jeweils einen flexiblen Druckluftschlauch umfassen, wobei ein freies Ende des jeweiligen Druckluftschlauchs an ein Reifenventil anschließbar ist. Die Druckluftanschlüsse können so am Kraftfahrzeug angebracht werden, dass sich mit jedem Druckluftschlauch im entnommenen Zustand ein Rad bequem erreichen lässt. Es ist daher nicht mehr nötig, einen separaten Kompressor für Notfälle mitzuführen, diesen bei einer Reifenpanne im Zubehör des Kraftfahrzeugs zu suchen und am Rad anzuordnen. Zum anderen zeichnet sich das Notfallsystem dadurch aus, dass die Wagenheber in ein Fahrgestell des Kraftfahrzeugs integriert sind und jeweils eine aus dem Fahrgestell gegen den Boden ausfahrbare Stütze umfassen. Die Stützen werden von einem jeweiligen über die Fahrzeugbatterie gespeisten Getriebemotor angetrieben und können das Kraftfahrzeug an am Fahrgestell vorgesehenen Wagenheberpunkten anheben. Es ist daher nicht mehr nötig, einen separaten Wagenheber für Notfälle mitzuführen, diesen bei einer Reifenpanne im Zubehör des Kraftfahrzeugs zu suchen und am Rad anzuordnen. Überdies zeichnet sich das Notfallsystem dadurch aus, dass das Notfallsystem eine Kontrolleinheit, die mit der Drucklufteinheit, der Anzahl elektrisch betriebener Wagenheber und einer Fahrzeugbatterie verbindbar ist, umfasst. Die mit der Fahrzeugbatterie verbundene Kontrolleinheit kann den Kompressor und die elektrisch betriebenen Wagenheber mit Strom versorgen. Es ist daher wedernötig im Pannenfall für eine verfügbare Spannungsquelle zu sorgen, noch einen Kompressor und/oder einen elektrischen Wagenheber an die Spannungsquelle anzuschließen. Durch die Steuereinheit, die zum Bedienen der Kontrolleinheit eingerichtet ist, können der Kompressor und die elektrisch betriebenen Wagenheber bequem bedient werden. Die Steuereinheit kann an der Kontrolleinheit angeordnet sein. Die Steuereinheit kann eine Eingabeeinheit, z.B. Tasten, zum Bedienen der Kontrolleinheit umfassen. Die Steuereinheit kann eine Ausgabeeinheit, z.B. ein Display, umfassen.

In Ausführungsformen sind die Druckluftschläuche aus dem Kraftfahrzeug herausziehbar sind. Die Druckluftschläuche können in einem Staufach im Unterboden des Kraftfahrzeugs angeordnet sein. Die Druckluftschläuche können in einem Nichtbenutzungszustand vollständig im Kraftfahrzeug verstaut und aus dem Kraftfahrzeug herausziehbar sein. Das Staufach kann nach unten, d.h. zum Boden unter dem Kraftfahrzeug hin, zu öffnen sein. Eine Öffnung des Staufachs kann durch eine schwenkbare Klappe verschließbar sein.

In Ausführungsformen sind die Druckluftschläuche auf eine jeweilige Haspel 82 aufwickelbar und daraus im Pannenfall herausziehbar. In einem Nichtbenutzungszustand können die Druckluftschläuche vollständig auf die jeweilige Haspel aufgewickelt in einem Staufach im Kraftfahrzeug verstaut sein.

In Ausführungsformen ist jedem Reifen jeweils ein elektrisch betriebener Wagenheber und ein Druckluftanschlüsse zugeordnet. Es ist denkbar, dass ein Wagenheber mehreren Rädern zugeordnet sein kann. Es ist denkbar, dass ein Druckluftanschluss mehreren Rädern zugeordnet sein kann. Es ist denkbar, dass einem Rad mehrere Wagenheber zugeordnet sind.

In Ausführungsformen werden die Druckluftschläuche von zumindest einem mit dem Kompressor verbundenen Drucktank gespeist. Das Notfallsystem kann einen Drucktank umfassen. Der Drucktank kann z.B. im Kofferraum des Kraftfahrzeugs angeordnet sein. Der Drucktank kann eingerichtet sein, eine von dem Kompressor erzeugte Druckluft zu speichern. Der Drucktank kann einen Druckregler zum Überwachen des Drucks im Drucktank umfassen.

In Ausführungsformen ist die Kontrolleinheit mit einer für den Betrieb des Kraftfahrzeugs notwenigen Vorrichtung verbindbar. Die Kontrolleinheit kann mit einer für eine Inbetriebnahme des Kraftfahrzeugs notwenigen Vorrichtung, z.B. einer Wegfahrsperre des Kraftfahrzeugs, verbunden sein. Die Kontrolleinheit kann eingerichtet sein, einen Betriebsstatus der für eine Inbetriebnahme des Kraftfahrzeugs notwenigen Vorrichtung anzuzeigen.

In Ausführungsformen ist die Kontrolleinheit eingerichtet, die für die Inbetriebnahme des Kraftfahrzeugs notwenige Vorrichtung zu aktivieren und/oder zu deaktivieren. Die Kontrolleinheit kann eingerichtet sein, z.B. eine Wegfahrsperre des Kraftfahrzeugs zu aktivieren und/oder zu deaktivieren.

In Ausführungsformen ist die Kontrolleinheit mit einem Bussystem des Kraftfahrzeugs verbindbar. Die Kontrolleinheit kann zum Empfangen von Informationen einer mit dem Bussystem des Kraftfahrzeugs verbundenen Vorrichtung des Kraftfahrzeugs eingerichtet sein. Die Kontrolleinheit z.B. mit einer Reifendruckkontrolle des Kraftfahrzeugs über das Bussystem verbunden sein. Die Kontrolleinheit kann zum Senden von Informationen an die mit dem Bussystem des Kraftfahrzeugs verbundene Vorrichtung des Kraftfahrzeugs eingerichtet sein. Die Kontrolleinheit kann z.B. einen Reifendruck an die Reifendruckkontrolle senden. Das Bussystem kann beispielsweise ein CAN-Bus sein.

In Ausführungsformen umfasst die Steuereinheit eine kabelgebundene und/oder kabellose Fernbedienung, wobei die Steuereinheit zum Bedienen der Kontrolleinheit über die Fernbedienung eingerichtet ist. Die Steuereinheit kann eine Fernbedienung umfassen. Die Fernbedienung kann kabelgebunden mit der Steuereinheit verbunden sein. Die Fernbedienung kann kabellos mit der Steuereinheit verbunden sein. Die Steuereinheit kann zum Bedienen der Kontrolleinheit über die Fernbedienung eingerichtet sein.

In Ausführungsformen ist die Steuereinheit mit einem Mobilgerät, beispielsweise einem Mobiltelefon, verbindbar, wobei die Steuereinheit zum Bedienen der Kontrolleinheit über das Mobilgerät eingerichtet ist. Die Steuereinheit kann zum drahtlosen Verbinden mit dem Mobilgerät eingerichtet sein. Die Steuereinheit kann z.B. über eine Bluetooth-Verbindung mit dem Mobilgerät verbunden sein. Das Mobilgerät kann in unmittelbarer Umgebung mit dem Kraftfahrzeug verbunden sein. Es ist auch denkbar, dass das Mobilgerät mit der Steuereinrichtung verbunden ist, ohne dass sich das Mobilgerät in der Nähe des Kraftfahrzeugs befindet. Das Mobilgerät kann dabei die Fernbedienung sein.

### Kurzbeschreibung der Zeichnungen

Ausführungsformen der Erfindung werden im Folgenden anfand der Zeichnungen näher erläutert. Es zeigen:
- Fig. 1: eine schematische Darstellung der Komponenten des erfindungsgemäßen Notfallsystems für ein Kraftfahrzeug gemäß einer Ausführungsform;
- Fig. 2: eine seitliche Teilansicht eines Kraftfahrzeugs im Bereich des hinteren linken Rades mit dem erfindungsgemäßen Notfallsystems für ein Kraftfahrzeug gemäß der Ausführungsform.

### Detaillierte Beschreibung von Ausführungsformen

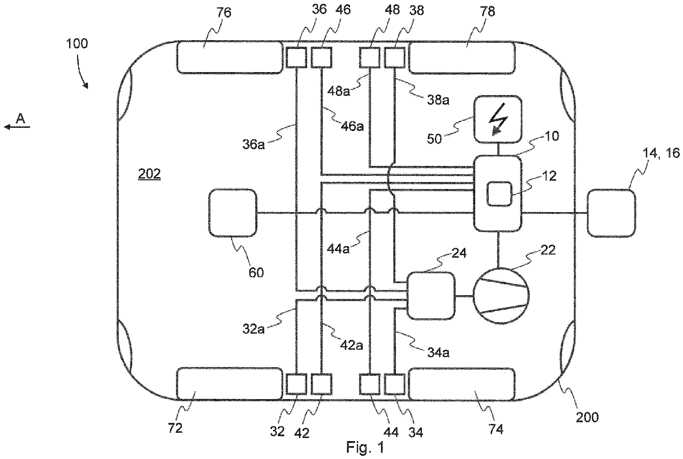

Fig. 1 zeigt schematisch ein Kraftfahrzeug 200 in einer Draufsicht. Es handelt sich hierbei um ein übliches Straßenfahrzeug mit vier Rädern 72, 74, 76, 78, die bezüglich der Fahrtrichtung (durch einen Pfeil A gekennzeichnet) vorne rechts und links und hinten rechts und links an einem nicht im einzelnen dargestellten Fahrgestell 202 des Kraftfahrzeugs 200 angeordnet sind.

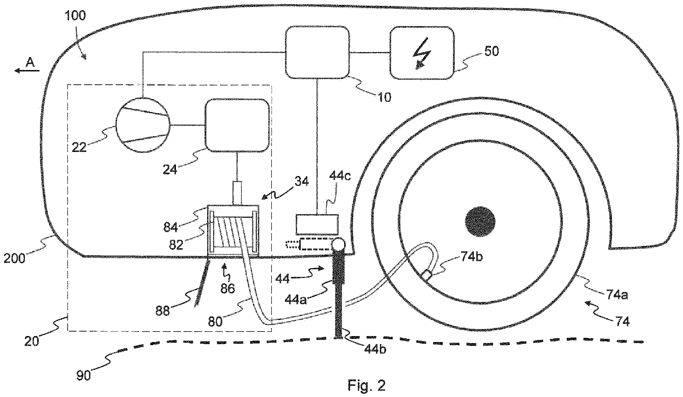

Die Räder 72, 74, 76, 78 weisen, wie in Fig. 2 für das hintere linke Rad 74 gezeigt, jeweils eine Luftbereifung 74a auf. Im Fall einer Reifenpanne und eines Druckverlusts eines der Räder muss entweder das beschädigte Rad gegen ein Ersatzrad getauscht werden oder die zum Druckverlust führende Reifenbeschädigung muss zumindest provisorisch behoben werden. Um das beschädigte Rad gegen ein Ersatzrad zu tauschen oder das beschädigte Rad zumindest provisorisch zu reparieren, muss das Kraftfahrzeugs an einer vorbestimmten Position an dem Fahrgestell angehoben werden. Nachdem das beschädigte Rad getauscht oder repariert und anschließend wieder aufgepumpt wurde, kann das Kraftfahrzeug wieder abgesenkt werden.

Für diesen Fall umfasst das Notfallsystem 100 eine Drucklufteinheit 20, eine Anzahl elektrisch betriebener Wagenheber 42, 44, 46, 48 und eine Kontrolleinheit 10.

Die Kontrolleinheit 10 ist mit der Drucklufteinheit 20, der Anzahl elektrisch betriebener Wagenheber 42, 44, 46, 48 und einer Fahrzeugbatterie 50 verbunden. Die Kontrolleinheit 10 umfasst eine Steuereinheit 12. Die Steuereinheit 12 ist zum Bedienen der mit der Kontrolleinheit 10 verbundenen Drucklufteinheit 20 und der Anzahl elektrisch betriebener Wagenheber 42, 44, 46, 48 eingerichtet. Die Kontrolleinheit 10 ist eingerichtet, die elektrisch betriebenen Wagenheber 42, 44, 46, 48 über die Fahrzeugbatterie 50 mit Strom zu versorgen.

Die Wagenheber 42, 44, 46, 48 sind über Stromleitungen 42a, 44a, 46a, 48a mit der Kontrolleinheit 10 verbunden. Die Wagenheber 42, 44, 46, 48 sind, wie in Fig. 2 für das hintere linke gezeigt, in das Fahrgestell 202 des Kraftfahrzeugs 200 integriert. Die Wagenheber 42, 44, 46, 48 sind aus dem Fahrgestell 202 nach unten in Richtung des Bodens 90 zeigend ausklappbar. Jeder Wagenheber 42, 44, 46, 48 umfasst eine aus einem Gehäuse 44a nach unten in Richtung des Bodens 90 ausfahrbare Stütze 44b. Die Stütze 44b wird von einem Getriebemotor 44c betrieben. Der Getriebemotor 44c treibt die Stütze 44b zum Ausfahren aus dem Gehäuse 44a und zum Einfahren in das Gehäuse 44b an. Durch das Ausfahren der Stütze 44b aus dem Gehäuse 44a lässt sich die Stütze 44b gegen den Boden 90 drücken und dadurch lässt sich das Fahrgestell 202 zusammen mit dem Kraftfahrzeug 200 anheben. Im Nichtbenutzungszustand ist der Wagenheber 44 vollständig und zumindest von der Seite des Kraftfahrzeugs 200 her unsichtbar in den Unterboden des Kraftfahrzeugs 200 eingezogen. Der jeweilige Getriebemotor 44c der Wagenheber 42, 44, 46, 48 ist mit der Kontrolleinheit 10 verbunden. Der jeweiligen Getriebemotor 44c der Wagenheber 42, 44, 46, 48 wird über die Steuereinheit 12 der Kontrolleinheit 10 bedient. Über die Steuereinheit 12 der Kontrolleinheit 10 wird ein zu bedienender Wagenheber 42, 44, 46, 48 ausgewählt. Es können mehrere Wagenheber 42, 44, 46, 48 ausgewählt und gleichzeitig über die Steuereinheit 12 bedient werden.

Die Drucklufteinheit 20 ist zur provisorischen Druckluftbeaufschlagung von den Reifen 72, 74, 76, 78 des Kraftfahrzeugs 200 im Pannenfall eingerichtet. Die Drucklufteinheit 20 umfasst einen Kompressor 22 und eine Druckluft-Reifenfüllanlage. Der Kompressor 22 ist mit einem Drucktank 24 verbunden. Der Drucktank 24 speichert die von dem Kompressor 22 erzeugte Druckluft. Die Druckluft-Reifenfüllanlage umfasst eine Anzahl fest am Kraftfahrzeug 200 installierte Druckluftanschlüsse 32, 34, 36, 38. Die Druckluftanschlüsse 32, 34, 36, 38 umfassen jeweils einen flexiblen Druckluftschlauch 80. Wie in Fig. 2 gezeigt, ist der Druckluftschlauch 80 in einem Staufach 84 im Unterboden des Kraftfahrzeugs 200 auf eine Haspel 82 aufwickelbar und daraus herausziehbar. In einem Nichtbenutzungszustand ist der Druckluftschlauch 80 vollständig auf die Haspel 82 aufgewickelt im Staufach 84 im Kraftfahrzeug 200 verstaut. Das Staufach 84 ist nach unten, d.h. zum Boden 90 unter dem Kraftfahrzeug 200 hin, zu öffnen. Eine Öffnung 86 des Staufachs 84 ist durch eine schwenkbare Klappe 88 verschließbar.

Zum Aufpumpen des Reifens 74a des Rades 74 wird die Klappe 88 geöffnet, und der flexible Druckluftschlauch 80 wird aus der Öffnung 86 nach unten aus dem Staufach 74 herausgezogen. Die Haspel 82 kann so eingerichtet sein, dass sie den Druckluftschlauch 80 selbsttätig einzieht und das Herausziehen des Druckluftschlauches 80 gegen eine Rotationsvorspannung der Haspel 82 erfolgt. Die Länge des Druckluftschlauchs 80 ist ausreichend, um von der Position des Druckluftanschlusses 34 aus das Reifenventil 74b des Reifes 74a in jeder Drehstellung des Rades 74 erreichen zu können. Das freie Ende des Druckluftschlauchs 80 ist an das Reifenventil 74b anschließbar. Der Reifen 74a wird über den Druckluftanschluss 34 aufgepumpt. Hierzu wird der Druckluftanschluss 34, wie auch die übrigen Druckluftanschlüsse 32, 36 und 38 über Druckluftleitungen 32a, 34a, 36a, 38a mit dem durch den Kompressor 22 gespeisten Drucktank 24 verbunden und mit Druckluft gespeist. Der Druckluftanschluss 34 wird über die Steuereinheit 12 der Kontrolleinheit 10 bedient. Über die Steuereinheit 12 der Kontrolleinheit 10 kann ein zu bedienender Druckluftanschluss 32, 34, 36, 38 ausgewählt werden. Es können mehrere Druckluftanschlüsse 32, 34, 36, 38 ausgewählt und gleichzeitig über die Steuereinheit 12 bedient werden.

Zur individuellen Bedienung der Druckluftanschlüsse 32, 34, 36, 38 und der Wagenheber 42, 44, 46, 48 können verschiedene Möglichkeiten vorgesehen sein. Beispielsweise können die Druckluftanschlüsse 32, 34, 36, 38 und die Wagenheber 42, 44, 46, 48 über die Steuereinheit 12 der Kontrolleinheit 10 bedienbar sein. Die Steuereinheit 12 kann eine Anzahl an Schalter zur Bedienung der Kontrolleinheit 10 umfassen. Die Steuereinheit 12 kann ein Display zur Bedienung der Kontrolleinheit 10 umfassen. Wie in Fig. 1 gezeigt, ist die Steuereinheit 12 mit einer Fernbedienung 14 verbunden. Die Fernbedienung 14 ist kabellos mit der Steuereinheit 12 verbindbar. Die Steuereinheit 12 ist zum Bedienen der Kontrolleinheit 10 über die Fernbedienung 14 eingerichtet ist. Die Fernbedienung 14 ist eingerichtet, die mit der Kontrolleinheit 10 verbundenen Druckluftanschlüsse 32, 34, 36, 38 und die Wagenheber 42, 44, 46, 48 über die Steuereinheit 12 in unmittelbarer Nähe des Kraftfahrzeugs 200 zu bedienen. Die Steuereinheit 12 kann mit einem Mobilgerät 16 als Fernbedienung, beispielsweise einem Mobiltelefon, verbunden sein. Die Steuereinheit 12 ist zum Bedienen der Kontrolleinheit 10 über das Mobilgerät 16 eingerichtet. Die mit der Kontrolleinheit 10 verbundenen Druckluftanschlüsse 32, 34, 36, 38 und die Wagenheber 42, 44, 46, 48 können über das mit der Steuereinheit 12 verbundene Mobilgerät 16 bedient werden.

Die Kontrolleinheit 10 ist mit einem Bussystem 60 des Kraftfahrzeugs 200 verbunden. Die Kontrolleinheit 10 kann Informationen von einer mit dem Bussystem 60 des Kraftfahrzeugs 200 verbundenen Vorrichtung des Kraftfahrzeugs 200 empfangen. Die Kontrolleinheit 10 kann Informationen an, die mit dem Bussystem des Kraftfahrzeugs 200 verbundene Vorrichtung des Kraftfahrzeugs 200 senden. Beispielsweise kann die Kontrolleinheit 10 nach dem Aufpumpen des Rads 74a einen Reifendruck an eine Reifendruckkontrolle des Kraftfahrzeugs 200 senden.

Die dargestellte Ausführungsform ist selbstverständlich nicht auf die dargestellten Merkmale beschränkt sondern kann, soweit technisch möglich, alle genannten Merkmale umfassen.

## Patentansprüche

1. Notfallsystem (100) für ein Kraftfahrzeug (200), umfassend eine Drucklufteinheit (20) und eine Anzahl elektrisch betriebener Wagenheber (42, 44, 46 ,48), **dadurch gekennzeichnet, dass** das Notfallsystem (100) eine Kontrolleinheit (10), die mit der Drucklufteinheit (20), der Anzahl elektrisch betriebener Wagenheber (42, 44, 46, 48) und einer Fahrzeugbatterie (50) verbindbar ist, umfasst,
wobei die Drucklufteinheit (20) zur Druckluftbeaufschlagung von Reifen (72, 74, 76, 78) des Kraftfahrzeugs (200), insbesondere im Pannenfall, eingerichtet ist und einen Kompressor (22) und eine Druckluft-Reifenfüllanlage umfasst, wobei die Druckluft-Reifenfüllanlage eine Anzahl fest am Kraftfahrzeug (200) installierter Druckluftanschlüsse (32, 34, 36, 38) umfasst, die jeweils einen flexiblen Druckluftschlauch (80) umfassen, wobei ein freies Ende des jeweiligen Druckluftschlauchs (80) an ein Reifenventil (74b) anschließbar ist, wobei die Druckluftschläuche (80) in einem Nichtbenutzungszustand vollständig im Kraftfahrzeug (200) verstaubar und daraus entnehmbar sind und wobei die Druckluftschläuche (80) durch den Kompressor (22) gespeist werden;
wobei die Anzahl elektrisch betriebener Wagenheber (42, 44, 46, 48) in ein Fahrgestell (202) des Kraftfahrzeugs (200) integriert ist und jeweils eine aus dem Fahrgestell (202) gegen den Boden (90) ausfahrbare Stütze (44b) umfasst, wobei die jeweilige Stütze (44b) von einem jeweiligen über die Fahrzeugbatterie (40) gespeisten Getriebemotor (44c) angetrieben wird;
wobei die Kontrolleinheit (10) eine Steuereinheit (12) umfasst, die zum Bedienen der Kontrolleinheit (10) eingerichtet ist.

2. Notfallsystem (100) nach Anspruch 1, **dadurch gekennzeichnet, dass** die Druckluftschläuche (80) aus dem Kraftfahrzeug herausziehbar sind.

3. Notfallsystem (100) nach Anspruch 1, **dadurch gekennzeichnet, dass** die Druckluftschläuche (80) auf eine jeweilige Haspel (82) aufwickelbar und darauf aus dem Kraftfahrzeug herausziehbar sind.

4. Notfallsystem (100) nach einem der vorhergehenden Ansprüche, **dadurch gekennzeichnet, dass** jedem Reifen (72, 74, 76, 78) jeweils ein elektrisch betriebener Wagenheber (42, 44, 46, 48) und ein Druckluftanschluss (32, 34, 36, 38) zugeordnet ist.

5. Notfallsystem (100) nach einem der vorhergehenden Ansprüche, **dadurch gekennzeichnet, dass** die Druckluftschläuche (80) von zumindest einem mit dem Kompressor (22) verbundenen Drucktank (24) gespeist werden.

6. Notfallsystem (100) nach einem der vorhergehenden Ansprüche, **dadurch gekennzeichnet, dass** die Kontrolleinheit (10) mit einer für eine Inbetriebnahme des Kraftfahrzeugs (200) notwendigen Vorrichtung verbindbar ist.

7. Notfallsystem (100) nach Anspruch 6, **dadurch gekennzeichnet, dass** die Kontrolleinheit (10) eingerichtet ist, die für die Inbetriebnahme des Kraftfahrzeugs (200) notwenige Vorrichtung zu aktivieren und/oder zu deaktivieren.

8. Notfallsystem (100) nach einem der vorhergehenden Ansprüche, **dadurch gekennzeichnet, dass** die Kontrolleinheit (10) mit einem Bussystem (60) des Kraftfahrzeugs (200) verbindbar ist.

9. Notfallsystem (100) nach einem der vorhergehenden Ansprüche, **dadurch gekennzeichnet, dass** die Steuereinheit (12) eine kabelgebundene und/oder kabellose Fernbedienung (14) umfasst, wobei die Steuereinheit (12) zum Bedienen der Kontrolleinheit (10) über die Fernbedienung (14) eingerichtet ist.

10. Notfallsystem (100) nach einem der vorhergehenden Ansprüche, **dadurch gekennzeichnet, dass** die Steuereinheit (12) mit einem Mobilgerät (16), beispielsweise einem Mobiltelefon, verbindbar ist, wobei die Steuereinheit (12) zum Bedienen der Kontrolleinheit (10) über das Mobilgerät (16) eingerichtet ist.
